(19) Europäisches Patentamt / European Patent Office / Office européen des brevets

(11) **EP 4 597 417 B1**

## (12) EUROPEAN PATENT SPECIFICATION

(45) Date of publication and mention
of the grant of the patent:
**05.08.2026 Bulletin 2026/32**

(21) Application number: **25155720.3**

(22) Date of filing: **04.02.2025**

(51) International Patent Classification (IPC):
*G06T 5/94* *(2024.01)* *G06T 5/40* *(2006.01)*
*G06T 5/50* *(2006.01)* *G06T 7/11* *(2017.01)*
*G06T 7/143* *(2017.01)* *G06T 7/50* *(2017.01)*

(52) Cooperative Patent Classification (CPC):
**G06T 5/40; G06T 5/50; G06T 5/94; G06T 7/11;
G06T 7/143; G06T 7/50;** G06T 2207/10024;
G06T 2207/10048; G06T 2207/30232

(54) **IMAGE PROCESSING APPARATUS, IMAGE PROCESSING METHOD, AND
COMPUTER-READABLE STORAGE MEDIUM**

BILDVERARBEITUNGSVORRICHTUNG, BILDVERARBEITUNGSVERFAHREN UND
COMPUTERLESBARES SPEICHERMEDIUM

APPAREIL DE TRAITEMENT D'IMAGE, PROCÉDÉ DE TRAITEMENT D'IMAGE ET SUPPORT
D'INFORMATIONS LISIBLE PAR ORDINATEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.02.2024 JP 2024015776**

(43) Date of publication of application:
**06.08.2025 Bulletin 2025/32**

(73) Proprietor: **CANON KABUSHIKI KAISHA
Tokyo 146-8501 (JP)**

(72) Inventors:
• **OMORI, Hirotaka
Ohta-ku, Tokyo, 146-8501 (JP)**
• **DOBASHI, Toshiyuki
Ohta-ku, Tokyo, 146-8501 (JP)**

(74) Representative: **TBK
Bavariaring 4-6
80336 München (DE)**

(56) References cited:
JP-A- 2023 090 628     US-A1- 2019 045 139
US-B2- 11 457 155

# EP 4 597 417 B1

**Description**

BACKGROUND OF THE INVENTION

Field of the Invention

The present invention relates to an image processing technique.

Description of the Related Art

Known monitoring cameras are desired to photograph images with high visibility under various environments. However, in a case where a subject is covered in fog or haze, images will be low in contrast and poor in visibility. In the technique in Japanese Patent Laid-Open No. 2006-98614, according to a luminance histogram of an image, a low gradation section in a luminance correction curve and a high gradation section in the luminance correction curve are calculated. A middle gradation section obtained by drawing a line between an edge point of a low gradation side in the calculated high gradation section and the edge point of a high gradation side in the calculated low gradation section, in the luminance correction curve, is calculated. Then, using the calculated low gradation section, the middle gradation section and the high gradation section in the luminance curve, a luminance level of an image is corrected over all the gradation ranges.

However, since in the technique disclosed in Japanese Patent Laid-Open No. 2006-98614, the correction processing is performed on the entire image, correction suitable for a main subject cannot be performed in some cases. Even if known subject detection techniques are used in combination, there is a case where detection itself of the subject cannot be performed if particularly strongly covered in fog or haze. Literature JP 2023/090628 A shows another image processing apparatus and method.

SUMMARY OF THE INVENTION

The present invention provides a gradation correction technique suitable for improving visibility of a subject.
The present invention in its first aspect provides an image processing apparatus as specified in independent claim 1.
The present invention in its second aspect provides an image processing apparatus as specified in independent claim 8.
The present invention in its third aspect provides an image processing method as specified in independent claim 13.
The present invention in its fourth aspect provides an image processing method as specified in claim 14.
The present invention in its fifth aspect provides a computer-readable storage medium as specified in independent claim 15.
Advantageous modifications are set forth in the dependent claims.
Further features of the present invention will become apparent from the following description of exemplary embodiments with reference to the attached drawings.

BRIEF DESCRIPTION OF THE DRAWINGS

FIG. 1 is a block diagram illustrating a functional configuration example of a system.
FIG. 2 is a flowchart of processing performed by an image processing apparatus 103 to generate and output an output image.
FIG. 3A is a view illustrating a visible light image in which a scene including a ship and a rock is captured in a situation where fog and haze are light.
FIG. 3B is a view illustrating an invisible light image in which a scene including a ship and a rock is captured in a situation where fog and haze are light.
FIG. 4A is a view illustrating a visible light image in which a scene including a ship and a rock is captured in a situation where fog and haze are thick.
FIG. 4B is a view illustrating an invisible light image in which a scene including a ship and a rock is captured in a situation where fog and haze are thick.
FIG. 5 is a view illustrating an example of a histogram of a luminance value of an image obtained by capturing a scene where fog and haze occur.

FIG. 6A is a view illustrating an example of a histogram of a luminance value of a target region in a YCbCr image in which the visible light image of FIG. 4A is converted.

FIG. 6B is a view illustrating an example of a gradation correction curve that is calculated.

FIG. 7 is a block diagram illustrating a configuration example of a system.

FIG. 8 is a flowchart of processing performed by the image processing apparatus 103 to generate and output an output image.

FIG. 9 is a block diagram illustrating a hardware configuration example of a computer apparatus applicable to the image processing apparatus 103.

DESCRIPTION OF THE EMBODIMENTS

The invention is defined by the appended claims.

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

First Embodiment

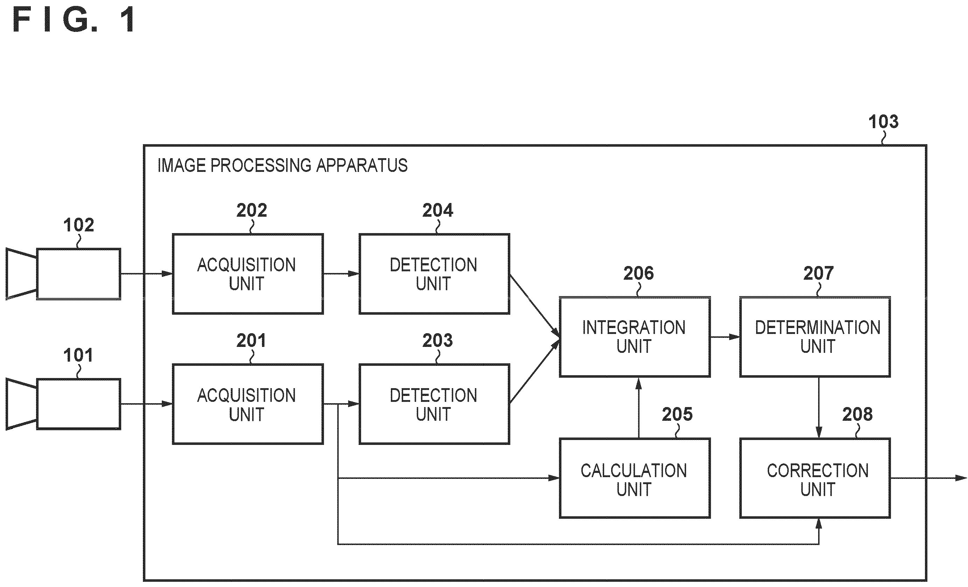

A functional configuration example of a system according to the present embodiment will be described with reference to the block diagram of FIG. 1. As illustrated in FIG. 1, the system according to the present embodiment includes a visible light camera 101, which is an image capturing apparatus that can capture visible light, an invisible light camera 102, which is an image capturing apparatus that can capture invisible light that cannot be captured by the visible light camera 101, and the image processing apparatus 103 that performs gradation correction on a captured image captured by the visible light camera 101 and outputs the image. The visible light camera 101 and the image processing apparatus 103 are directly or indirectly connected via a network such as a LAN or the Internet. Similarly, the invisible light camera 102 and the image processing apparatus 103 are directly or indirectly connected via a network such as a LAN or the Internet. However, the connection form between the visible light camera 101 and the image processing apparatus 103 and the connection form between the invisible light camera 102 and the image processing apparatus 103 are not limited to specific connection forms.

The visible light camera 101 includes an image forming optical system including one or more lenses, a visible light image capturing element (visible light sensor) that captures an optical image formed by the image forming optical system and converts the optical image into an electrical signal, and an image processing circuit that generates a captured image based on the electrical signal. The visible light sensor detects visible light in a wavelength range of, for example, about 380 nm to about 750 nm. The visible light sensor may have sensitivity in at least a part of the near-infrared wavelength region.

As described above, the invisible light camera 102 is an image capturing apparatus that captures invisible light that cannot be captured by the visible light camera 101, and the invisible light includes, for example, infrared rays, millimeter waves, and terahertz waves. The present embodiment assumes that infrared rays are captured. The invisible light camera 102 includes an image forming optical system including one or more lenses, an infrared ray image capturing element (infrared sensor) that captures an optical image formed by the image forming optical system and converts the optical image into an electrical signal, and an image processing circuit that generates a captured image based on the electrical signal. The infrared sensor detects infrared rays in a wavelength range of, for example, $0.83 \mu m$ to $1000 \mu m$. The present embodiment assumes to detect far infrared rays in a wavelength range of $6 \mu m$ to $1000 \mu m$. As the infrared sensor, a microbolometer or a thermal infrared sensor such as a silicon on insulator (SOI) diode type can be used. The visible light camera 101 and the invisible light camera 102 capture substantially the same image capturing region.

Next, the image processing apparatus 103 will be described. The image processing apparatus 103 performs gradation correction on a captured image captured by the visible light camera 101 based on a detection result of the subject from a captured image captured by the visible light camera 102 and a detection result of the subject from a captured image captured by the invisible light camera 101.

An acquisition unit 201 acquires, as a visible light image, a captured image captured by the visible light camera 101. An acquisition unit 202 acquires, as an invisible light image, a captured image captured by the invisible light camera 102.

A detection unit 203 detects the subject from a visible light image. As a method for detecting the subject from a visible light image, for example, various methods such as a pattern matching method, a method using a luminance gradient in a local region, and a method based on machine learning such as deep learning can be adopted. In the present embodiment, the detection unit 203 detects the subject from a visible light image using a learned model learned in advance by deep learning, as an example.

A detection unit 204 detects the subject from an invisible light image. A method for detecting the subject from an invisible light image may be the same as the method for detecting the subject from a visible light image, or may be a method different from the method for detecting the subject from a visible light image. In the present embodiment, as an example, the detection unit 204 detects the subject from an invisible light image by a method similar to that of the detection unit 203.

Note that even in a case where the detection method of the subject in each of the detection unit 203 and the detection unit 204 is similar, for example, a learned model of machine learning such as deep learning may be different between the detection unit 203 and the detection unit 204, or may be the same. The present embodiment assumes that, as an example, the detection unit 203 performs subject detection processing on a visible light image using a "learned model (first model) learned to detect the ship (main subject) from the image by using features of the shape and the color". The present embodiment assumes that, as an example, the detection unit 204 performs subject detection processing on an invisible light image using a "learned model (second model) learned to detect the ship from the image using the silhouette of the hull".

The detection unit 203 detects one or more subjects from a visible light image by inputting the visible light image into the first model and performing calculation of the first model, and calculates, for each of the detected subjects, likelihood representing the degree of likelihood of being a main subject as a visible light subject evaluation value. It is expressed that the higher the visible light subject evaluation value of the subject detected from the visible light image, the higher the possibility that the main subject is present in a region of the subject in the visible light image.

The detection unit 204 detects one or more subjects from an invisible light image by inputting the invisible light image into the second model and performing calculation of the second model, and calculates, for each of the detected subjects, likelihood representing the degree of likelihood of being a main subject as an invisible light subject evaluation value. It is expressed that the higher the invisible light subject evaluation value of the subject detected from the invisible light image, the higher the possibility that the main subject is present in a region of the subject in the invisible light image.

In the present embodiment, both the visible light subject evaluation value and the invisible light subject evaluation value are expressed by values within a range of 0 to 100, but the range that the visible light subject evaluation value and the invisible light subject evaluation value can have is not limited to a specific range.

An integration unit 206 calculates, for each subject, an integrated evaluation value that is a value obtained by adding a value in which the visible light subject evaluation value of the subject detected from the visible light image is weighted with a "first weight value with respect to the visible light subject evaluation value" calculated by a calculation unit 205 and a value in which the invisible light subject evaluation value of the subject detected from the invisible light image is weighted with a "second weight value with respect to the invisible light subject evaluation value" calculated by the calculation unit 205.

The calculation unit 205 calculates a level (fog and haze level) of fog and haze in a visible light image based on the visible light image acquired by the acquisition unit 201, and calculates the first weight value and the second weight value based on the fog and haze level. The first weight value and the second weight value can be normalized such that a total value thereof is 1. Here, one of the first weight value and the second weight value can be 0. That is, in the integrated evaluation value, only the visible light subject evaluation value can be reflected, or only the invisible light subject evaluation value can be reflected.

A determination unit 207 specifies, as a region (target region) that is a target of gradation correction, a region of the main subject from the region of the subject detected from the visible light image based on the integrated evaluation value calculated for each subject by the integration unit 206. For example, the determination unit 207 may specify, as a target region, a region of the subject corresponding to an integrated evaluation value a threshold or more among the integrated evaluation value calculated for each subject by the calculation unit 205. For example, the determination unit 207 may specify, as a target region, a region of the subject corresponding to a maximum integrated evaluation value among the integrated evaluation value calculated for each subject by the calculation unit 205.

A correction unit 208 calculates a gradation correction curve based on the distribution of the luminance value of a target region in a visible light image, performs gradation correction of converting the luminance value in the target region based on the gradation correction curve, and outputs, as an output image, a visible light image subjected to gradation correction. The output destination of the output image is not limited to a specific output destination. For example, the correction unit 208 may output the output image to a memory apparatus in the image processing apparatus 103 or a memory apparatus connected to the image processing apparatus 103, or may output the output image to a display apparatus. The correction unit 208 may transmit the output image to an external apparatus via a network. The correction unit 208 may further output a visible light image or an invisible light image before gradation correction by the correction unit 208. In this manner, the correction unit 208 may output further information in addition to the output image.

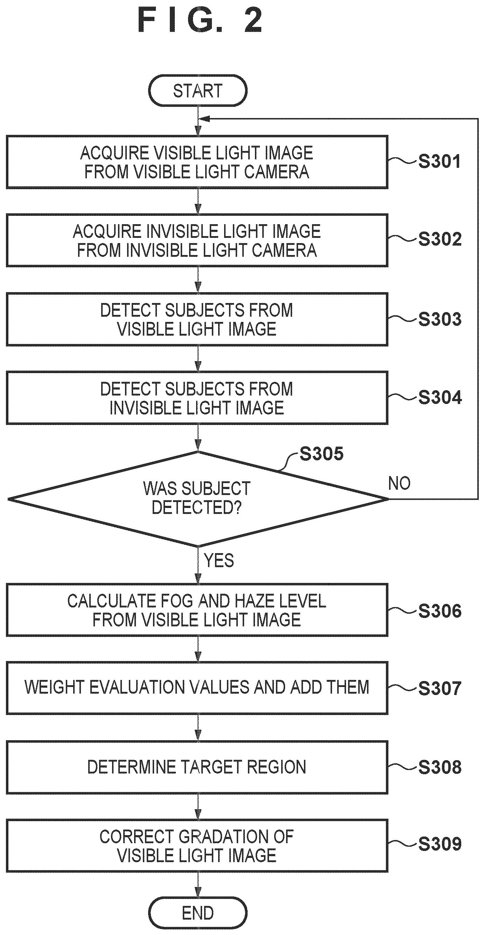

Next, processing performed by the image processing apparatus 103 to generate and output an output image will be described with reference to the flowchart of FIG. 2. Note that not only in the flowchart of FIG. 2 but also in the flowchart used in the following description, the order of some processes may be appropriately changed, or some processes may be performed in parallel.

In step S301, the acquisition unit 201 acquires, as a visible light image, a captured image captured by the visible light camera 101. In step S302, the acquisition unit 202 acquires, as an invisible light image, a captured image captured by the invisible light camera 102.

In step S303, the detection unit 203 inputs the visible light image acquired in step S301 to the first model and calculates the first model, thereby detecting one or more subjects from the visible light image and calculating a visible light subject evaluation value for each of the detected subjects.

In step S304, the detection unit 204 inputs the invisible light image acquired in step S302 to the second model and calculates the second model, thereby detecting one or more subjects from the invisible light image and calculating an invisible light subject evaluation value for each of the detected subjects.

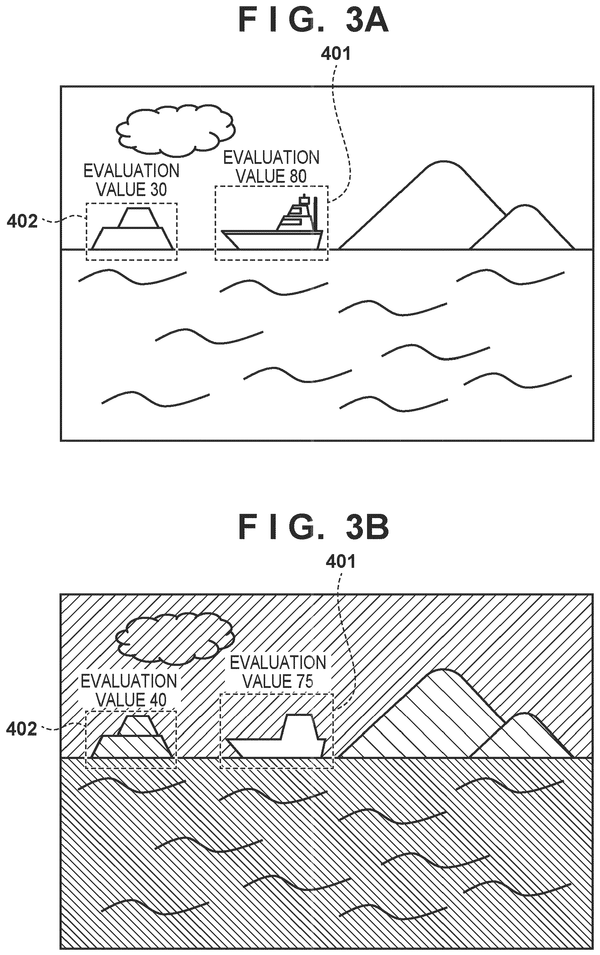

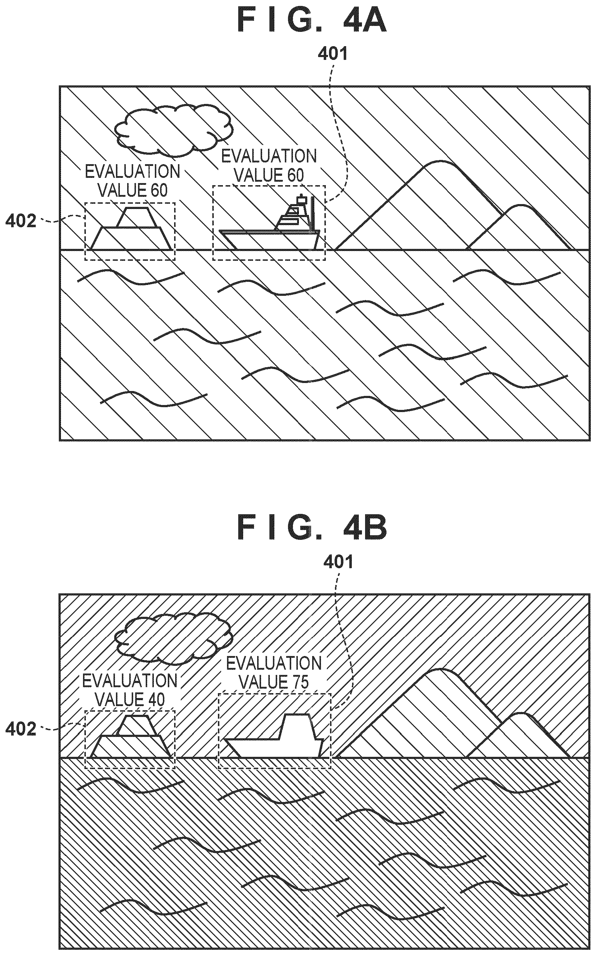

Here, a visible light image and an invisible light image in which a scene including a ship and a rock is captured in a situation where fog and haze are light are illustrated in FIGS. 3A and 3B, respectively, and a visible light image and an invisible light image in which the scene is captured in a situation where fog and haze are thick are illustrated in FIGS. 4A and 4B, respectively.

In FIGS. 3A and 4A, a ship 401 is detected as a result of performing subject detection processing for detecting the main subject (ship) on the visible light image, but since the shape of a rock 402 is similar to the shape of the ship 401, the rock 402 is also detected.

In the visible light image of FIG. 3A, since fog and haze are light, it is possible to obtain many characteristics of the color and the shape of the rock 402 and the ship 401. That is, since the rock 402 and the ship 401 are easily distinguished, there is a low possibility of misrecognition. Therefore, the visible light subject evaluation value of the ship 401 is as high as "80", the visible light subject evaluation value of the rock 402 is as low as "30", and the respective visible light subject evaluation values are greatly different. On the other hand, in the visible light image of FIG. 4A, since fog and haze are thick, it is difficult to obtain many characteristics of the color and the shape of the rock 402 and the ship 401. That is, since it is difficult to distinguish between the rock 402 and the ship 401, there is a possibility of misrecognition. Therefore, the visible light subject evaluation value of the ship 401 is "60", the visible light subject evaluation value of the rock 402 is "60", and the respective visible light subject evaluation values are the same value. In this manner, in subject detection using a visible light image, the accuracy of the visible light subject evaluation value greatly changes due to the influence of fog and haze.

In FIGS. 3B and 4B, the ship 401 is detected as a result of performing subject detection processing for detecting the main subject (ship) on the invisible light image, but since the shape of a rock 402 is similar to the shape of the ship 401, the rock 402 is also detected.

In general, fog and haze occur by scattering of light due to an influence of fine particles or the like in the air. It is known that this scattering is lighter as the wavelength is longer. Since the invisible light camera 102 used in the present embodiment uses a wavelength in the far infrared region, it is less susceptible to fog and haze than the visible light camera 101. Therefore, in both FIGS. 3B and 4B, the invisible light subject evaluation value of the ship 401 is "75", and the invisible light subject evaluation value of the rock 402 is "40", and the same value is obtained for the scenes where fog and haze are thick and light. Thus, in the subject detection using an invisible light image, subject detection using color information and the like cannot be performed, but the invisible light subject evaluation value can be stably acquired regardless of the influence of fog and haze.

Returning to FIG. 2, next, in step S305, the integration unit 206 determines whether or not the subject is detected from the visible light image and the invisible light image. As a result of this determination, if the subject is detected from the visible light image and the invisible light image, the processing proceeds to step S306. On the other hand, if the subject is not detected from the visible light image and the invisible light image, the processing proceeds to step S301.

In step S306, the calculation unit 205 calculates the degree (fog and haze level) of occurrence of fog and haze in the visible light image based on the visible light image acquired in step S301. Here, an example of a calculation method of the degree of occurrence of fog and haze in the visible light image will be described.

First, the calculation unit 205 generates a histogram of the luminance value in the visible light image acquired in step S301, and calculates a statistic value representing a distribution density of the generated histogram. For example, the calculation unit 205 obtains a variance $\sigma^2$ of the histogram according to the following Equation (1).

$$\sigma^2 = \frac{(x_1 - \mu)^2 \cdot f_1 + (x_2 - \mu)^2 \cdot f_2 + \cdots + (x_N - \mu)^2 \cdot f_N}{n}$$

...(1)

Here, $x_i$ (i = 1 to N) represents the i-th bin (input luminance level) in the histogram, N represents the number of bins, $f_i$ represents the frequency corresponding to the i-th bin, n represents the total number of pixels in the visible light image, and $\mu$ represents the mean value of luminance values in the visible light image. Note that in the present embodiment, the variance of the histogram is used as the statistic value representing the distribution density, but the present invention is not limited to this.

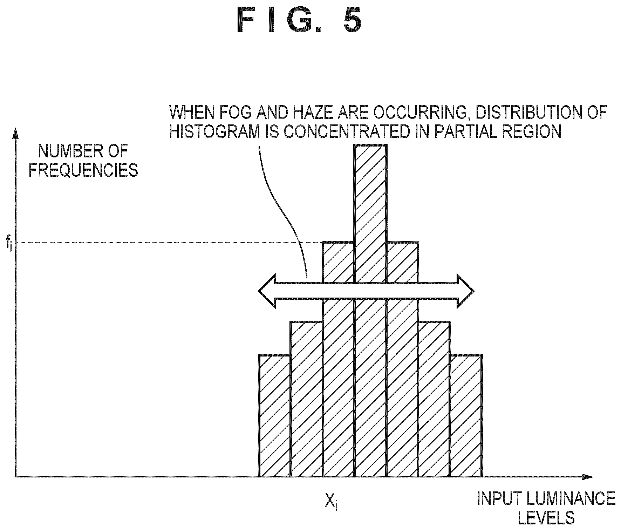

Next, the calculation unit 205 calculates the degree of occurrence of fog and haze in the visible light image based on the variance $\sigma^2$ of the histogram. In general, in an image in which a scene where fog and haze occur is captured, the distribution of a histogram of the luminance value is concentrated in a partial region, and the image is low in contrast as illustrated in FIG. 5. Therefore, the variance of the histogram of the luminance value in the image in which the scene where fog and haze occur is captured has a relatively small value. Therefore, the calculation unit 205 calculates a degree H of occurrence of fog and haze in the visible light image according to the result of magnitude comparison between an arbitrary threshold Th and the variance $\sigma^2$. For example, the calculation unit 205 calculates the degree H of occurrence of fog and haze according to the following Equation (2).

$$H = \begin{cases} 0.0 & (if\ \sigma^2 < 0) \\ \dfrac{Th - \sigma^2}{Th} & (if\ 0 \le \sigma^2 \le Th) \\ 1.0 & (if\ Th < \sigma^2) \end{cases}$$

$$...(2)$$

Here, the degree H of occurrence of fog and haze calculated according to Equation (2) is normalized in a range of 0.0 to 1.0, and it is expressed that a larger value of the degree H indicates a stronger degree of occurrence of fog and haze in the visible light image.

Next, the calculation unit 205 calculates w1, which is the "first weight value with respect to the visible light subject evaluation value", by performing calculation according to the following Equation (3) based on the degree H of occurrence of fog and haze. The calculation unit 205 calculates w2, which is the "second weight value with respect to the invisible light subject evaluation value", by performing calculation according to the following Equation (4) based on the degree H of occurrence of fog and haze.

$$w_1 = 1.0 - \alpha \cdot H$$

$$...(3)$$

$$w_2 = \alpha \cdot H$$

$$...(4)$$

Here, $\alpha$ is a parameter for adjustment and has a value of 0.0 to 1.0. In Equations (3) and (4), it is set that the larger the degree H of occurrence of fog and haze, the smaller the weight value with respect to the visible light subject evaluation value, and the smaller the degree H of occurrence of fog and haze, the larger the weight value with respect to the visible light subject evaluation value. This is because, in image capturing in a situation where fog and haze are light, there are a lot of color and shape information obtained from the visible light image, and thus, the detection result from the visible light image is reliable. In image capturing in a situation where fog and haze are thick, there are less color and shape information obtained from the visible light image, and thus, the detection result from the invisible light image is more reliable than the detection result from the visible light image.

Note that the equation for the calculation is not limited to a specific equation as long as the first weight value and the second weight value can be calculated such that the larger the degree H of occurrence of fog and haze, the smaller the weight value with respect to the visible light subject evaluation value (the larger the weight value with respect to the invisible light subject evaluation value), and the smaller the degree H of occurrence of fog and haze, the larger the weight value with respect to the visible light subject evaluation value (the smaller the weight value with respect to the invisible light subject evaluation value).

In the present embodiment, as an example, the degree H of occurrence of fog and haze calculated based on the visible light image of FIG. 3A having light fog and haze is 0.2, and the degree H of occurrence of fog and haze calculated based on the visible light image of FIG. 4A having thick fog and haze is 0.8. It is assumed that the adjustment parameter $\alpha = 1.0$. Therefore, the first weight value (w1) = 0.8 and the second weight value (w2) = 0.2 calculated using the degree H of occurrence of fog and haze calculated based on the visible light image of FIG. 3A. Similarly, the first weight value (w1) = 0.2 and the second weight value (w2) = 0.8 calculated using the degree H of occurrence of fog and haze calculated based on the visible light image of FIG. 4A.

Returning to FIG. 2, next, in step S307, the integration unit 206 calculates, for each subject, an integrated evaluation value that is a value obtained by adding a value in which the visible light subject evaluation value of the subject detected from the visible light image is weighted with the first weight value (w1) and a value in which the invisible light subject evaluation value of the subject detected from the invisible light image is weighted with the second weight value (w2).

If the visible light image of FIG. 3A and the invisible light image of FIG. 3B are obtained, the integrated evaluation value of the ship 401 is $0.8 \times 80 + 0.2 \times 75 = 79$, and the integrated evaluation value of the rock 402 is $0.8 \times 30 + 0.2 \times 40 = 32$.

If the visible light image of FIG. 4A and the invisible light image of FIG. 4B are obtained, the integrated evaluation value of the ship 401 is $0.2 \times 60 + 0.8 \times 75 = 72$, and the integrated evaluation value of the rock 402 is $0.2 \times 60 + 0.8 \times 40 = 44$.

In step S308, the determination unit 207 specifies, as a target region, the region of the main subject from the region of the subject detected from the visible light image based on the integrated evaluation value calculated for each subject in step S307.

For example, the determination unit 207 specifies, as a target region, a region of the subject corresponding to an integrated evaluation value a threshold or more. If the visible light image of FIG. 3A and the invisible light image of FIG. 3B are obtained, when the threshold = 50, the integrated evaluation value of the ship 401 is "79", and the integrated evaluation value of the rock 402 is "32", and therefore, the region of the ship 401 for which the integrated evaluation value the threshold or more has been calculated is specified as the target region. If the visible light image of FIG. 4A and the invisible light image of FIG. 4B are obtained, when the threshold = 50, the integrated evaluation value of the ship 401 is "72", and the integrated evaluation value of the rock 402 is "44", and therefore, the region of the ship 401 for which the integrated evaluation value the threshold or more has been calculated is specified as the target region.

In this manner, by specifying the target region using the integrated evaluation value obtained by the weighted addition of the visible light subject evaluation value and the invisible light subject evaluation value based on the degree of occurrence of fog and haze, even in a situation where fog and haze are thick as illustrated in FIG. 4, for example, it is possible to avoid erroneously determining the region of the rock 402 as the target region.

Returning to FIG. 2, next, in step S309, the correction unit 208 calculates a gradation correction curve based on the distribution of the luminance value of the target region in the visible light image. Then, the correction unit 208 performs gradation correction of converting the luminance value in the target region based on the calculated gradation correction curve, and outputs, as an output image, a visible light image subjected to gradation correction.

Hereinafter, as an example of the processing performed in step S309, the processing in step S309 in a case where the visible light image in FIG. 4A is acquired in step S301 and the invisible light image in FIG. 4B is acquired in step S302 will be described. Hereinafter, a case where the visible light image is an 8-bit RGB color image (image in which each pixel has an R component pixel value (0 to 255), a G component pixel value (0 to 255), and a B component pixel value (0 to 255)) will be described.

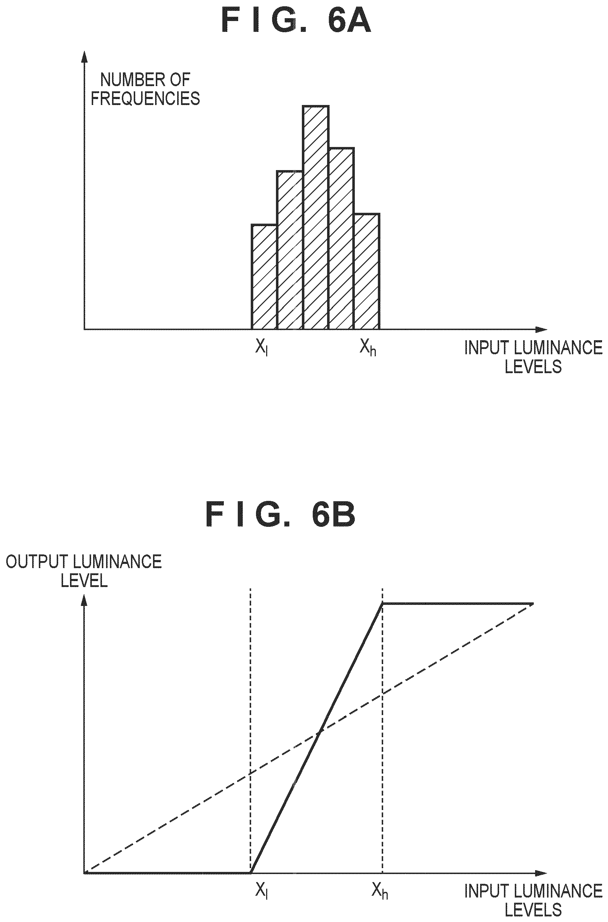

First, the correction unit 208 converts the visible light image into a YCbCr image (image in which each pixel has a Y component pixel value (0 to 255), a Cb component pixel value (0 to 255), and a Cr component pixel value (0 to 255)). Then, the correction unit 208 generates a histogram of the luminance value of the target region in the YCbCr image. FIG. 6A illustrates an example of a histogram of the luminance value (input luminance level) of the target region (region of the ship 401) in the YCbCr image in which the visible light image in FIG. 4A is converted.

Next, the correction unit 208 calculates bins (input luminance levels) x1 and xh in which the cumulative value of the number of frequencies of the histogram of the luminance value in the target region is the threshold or more. xl is a bin in which corresponding frequencies are sequentially added from a lower bin (0) to a higher bin (255), and the addition result is the threshold or more for the first time. xh is a bin in which corresponding frequencies are sequentially added from the higher bin (255) to the lower bin (0), and the addition result is the threshold or more for the first time. Note that the intensity of gradation correction can be adjusted by changing the threshold. The larger the threshold, the stronger the gradation correction, and the smaller the threshold, the weaker the gradation correction.

Next, the correction unit 208 calculates a gradation correction curve used for gradation correction of the target region. FIG. 6B illustrates an example of the calculated gradation correction curve. For example, the correction unit 208 sets the gradation correction curve as follows. That is, the output luminance level is set to 0 in the section in which the bin is 0 or more and less than xl, the output luminance level is set to 255 in the section in which the bin is more than xh and 255 or less, and the output luminance level is set to smoothly change from 0 to 255 in the section in which the bin is x1 or more and xh or less.

By applying the gradation correction curve set in this manner to each pixel in the target region in the YCbCr image, it is possible to specify the output luminance level corresponding to the luminance value (bin) of each pixel and generate, as a replacement image, an image in which the luminance value of each pixel in the target region in the YCbCr image is replaced with the output luminance level corresponding to the pixel.

Then, the correction unit 208 converts the replacement image into an RGB image (output image) and outputs the output image. Such an output image is an image in which the distribution of histogram concentrated due to the influence of fog and haze is spread and fog and haze are visually corrected.

In this manner, in the present embodiment, fog and haze removal suitable for the ship can be achieved by performing gradation correction processing based on the detection region of the ship. By weighting the evaluation value based on the degree of occurrence of fog and haze, it is possible to accurately detect the ship and perform good gradation correction even under a photographing condition with thick fog and haze.

Note that in the present embodiment, a case of using two cameras of a visible light camera and an invisible light camera has been described as an example. However, the present invention is not limited to this, and for example, a single image capturing apparatus including two sensors of a visible light sensor and an invisible light sensor may be used, or an image capturing apparatus including a pixel for visible light and a pixel for invisible light in one sensor may be used.

In the present embodiment, a case where each of the visible light camera 101, the invisible light camera 102, and the image processing apparatus 103 is a separate apparatus has been described. However, a single apparatus in which the visible light camera 101, the invisible light camera 102, and the image processing apparatus 103 are integrated may be configured.

In the present embodiment, the method using the histogram has been described as the calculation method of the fog and haze level, but other methods can be adopted. For example, the fog and haze level may be set to be high when the contrast value of the visible light image is low, and the fog and haze level may be set to be low when the contrast value is high. Alternatively, processing such as a high-pass filter may be performed on the visible light image, and the fog and haze level may be set to be higher as the intensity of the edge component is higher. Furthermore, the dark channel value of the visible light image may be calculated based on a Dark Channel Prior method, which is a known fog and haze removal method, and setting may be performed such that a region with a higher dark channel value has a higher fog and haze level.

In the present embodiment, a case where the ship is a main subject has been described as an example, but the present invention is not limited to the type of the subject, and another type of subject may be the main subject. For example, a subject such as an animal, a person, or a car may be used as a main subject.

Second Embodiment

In each of the following embodiments including the present embodiment, only the difference from the first embodiment will be described, assuming that they are similar to the first embodiment unless otherwise stated. In the first embodiment, the weight value with respect to the visible light subject evaluation value and the invisible light subject evaluation value is calculated based on the degree of occurrence of fog and haze in the visible light image. On the other hand, in the present embodiment, a weight value with respect to the visible light subject evaluation value and the invisible light subject evaluation value is calculated based on distance information indicating the distance from the visible light camera 101 to the subject.

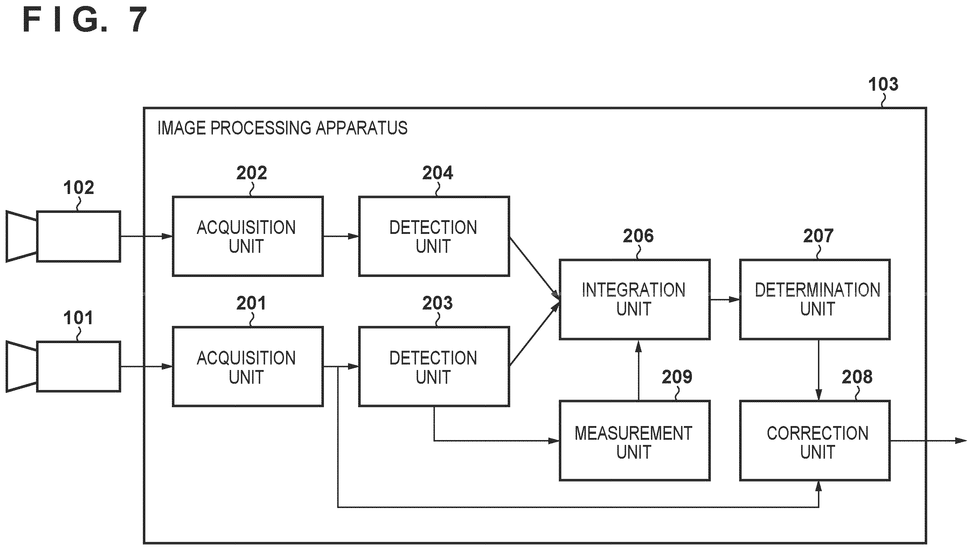

A configuration example of a system according to the present embodiment will be described with reference to the block diagram of FIG. 7. In FIG. 7, functional units similar to the functional units illustrated in FIG. 1 are denoted by the same reference numerals, and description of the functional units is omitted.

A measurement unit 209 measures (calculates) distance information indicating the distance between the subject detected from the visible light image by the detection unit 203 and the visible light camera 101. Then, the measurement unit 209 calculates the first weight value and the second weight value based on the distance information.

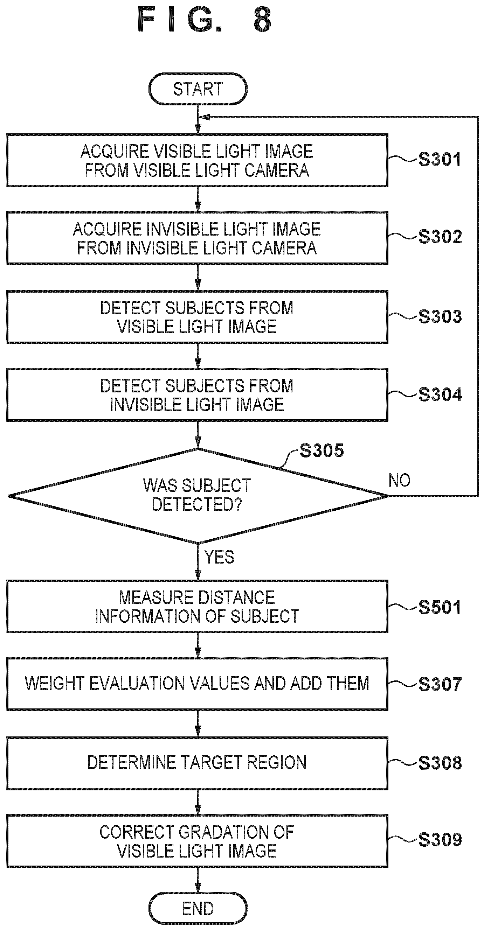

Next, processing performed by the image processing apparatus 103 to generate and output an output image will be described with reference to the flowchart of FIG. 8. In FIG. 8, processing steps similar to the processing steps shown in FIG. 2 are denoted by the same step numerals, and description of the processing steps is omitted.

In step S501, the measurement unit 209 acquires the distance (distance information) between the subject detected in step S303 and the visible light camera 101. There are various methods for acquiring the distance information, and the method is not limited to a specific method. For example, the measurement unit 209 may calculate the distance between the subject detected from the visible light image and the visible light camera 101 using a model in which the distance between a camera and the subject in the image captured by the camera has been learned by machine learning such as deep learning. Note that since the distance between the subject detected from the visible light image and the visible light camera 101 is calculated for each pixel in the region of the subject in the visible light image, the measurement unit 209 calculates a representative distance based on the distance obtained for each pixel in the region, and outputs the representative distance as distance information. For example, the measurement unit 209 may calculate, as a representative distance, the farthest distance or the closest distance among the distances obtained for the pixels in the region, or may calculate, as a representative distance, the mean distance of the distances obtained for the pixels in the region. If a plurality of subjects are detected from the visible light image, the measurement unit 209 calculates distance information for each subject. Then, the measurement unit 209 normalizes distance information D to a range of 0.0 to 1.0 according to the following Equation (5), and acquires distance information $D_N$ that is normalized.

$$D_{\mathrm{N}} = \begin{cases} 0.0 & (if\ D < Th_1) \\ \dfrac{D - Th_1}{Th_2 - Th_1} & (if\ Th_1 \le D \le Th_2) \\ 1.0 & (if\ Th_2 < D) \end{cases}$$

$$...(5)$$

Then, the calculation unit 205 calculates w1, which is the "first weight value with respect to the visible light subject evaluation value", by performing calculation according to the following Equation (6) based on the distance information $D_N$. The calculation unit 205 calculates w2, which is the "second weight value with respect to the invisible light subject evaluation value", by performing calculation according to the following Equation (7) based on the distance information $D_N$.

$$w_1 = 1.0 - \alpha \cdot D_{\mathrm{N}}$$

$$...(6)$$

$$w_2 = \alpha \cdot D_{\mathrm{N}}$$

$$...(7)$$

In Equations (6) and (7), the weight value with respect to the visible light subject evaluation value is set to be smaller as the distance information $D_N$ is larger, and the weight value with respect to the visible light subject evaluation value is set to be larger as the distance information $D_N$ is smaller. As described above, fog and haze occur by scattering of light due to the influence of fine particles or the like in the air. Therefore, the farther the distance from the visible light camera 101 to the subject is, the more fog and haze affect. Therefore, since it is considered that the influence of fog and haze is small for a subject at a close distance from the visible light camera 101, the weight value with respect to the visible light subject evaluation value is increased so that the detection result from the visible light image is more reliable than the detection result from the invisible light image. On the other hand, since it is considered that the influence of fog and haze is large for a subject at a far distance from the visible light camera 101, the weight value with respect to the invisible light subject evaluation value is increased so that the detection result from the invisible light image is more reliable than the detection result from the visible light image. The measurement unit 209 calculates the first weight value and the second weight value for each subject. Therefore, when calculating an integrated evaluation value for each subject, the integration unit 206 uses the first weight value and the second weight value for each subject.

Thus, according to the present embodiment, the weight values with respect to the visible light subject evaluation value and the invisible light subject evaluation value are calculated based on the distance information indicating the distance from the visible light camera 101 to the subject, and the integrated evaluation value is calculated based on the weight values. This can reduce erroneous determination of a subject other than the main subject as a target region for gradation correction even for a subject at a long distance that is easily affected by fog and haze.

Note that as described above, there are various methods for calculating the distance information, and the method is not limited to a specific method. For example, the distance information may be acquired using a distance sensor such as LIDAR. For example, the parallax between the visible light camera 101 and the invisible light camera 102 may be calculated using the visible light image captured by the visible light camera 101 and the invisible light image captured by the invisible light camera 102 to measure the distance information. Alternatively, the distance information may be measured based on the parallax between images obtained from two or more photodiodes using an image-plane phase-difference sensor including the photodiodes in some or all pixels. Alternatively, the distance information may be measured based on position information of the lens by focusing on the detected subject. In the present embodiment, the distance information is acquired using a visible light image, but the distance information may be measured using an invisible light image or both a visible light image and an invisible light image.

Third Embodiment

The functional units of the image processing apparatus 103 illustrated in FIGS. 1 and 7 may be implemented by hardware or software (computer programs). In the former case, each functional unit may be implemented by hardware such as an ASIC or a programmable logic array (PLA). ASIC is an abbreviation for application specific integrated circuit. Note that some functional units of the functional units may be implemented by hardware.

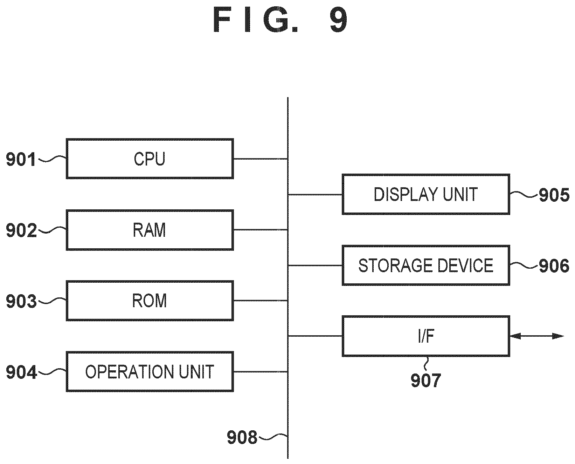

In the latter case, a computer apparatus that can perform such computer programs is applicable to the image processing apparatus 103. A hardware configuration example of the computer apparatus applicable to the image processing apparatus 103 will be described with reference to the block diagram of FIG. 9. As such a computer apparatus, a computer apparatus such as a PC, a tablet terminal apparatus, or a smartphone is applicable.

A CPU 901 performs various processes using computer programs and data stored in a RAM 902 or a ROM 903. By this, the CPU 901 controls the operation of the entire computer apparatus, and performs or controls various types of processing described as processing performed by the image processing apparatus 103. In place of the CPU 901, a programmable processor such as an MPU may be used. CPU is an abbreviation for central processing unit. MPU is an abbreviation for micro-processing unit.

The RAM 902 has an area for storing computer programs and data loaded from the ROM 903 and a storage device 906, and an area for storing computer programs and data received from the outside via an I/F 907. The RAM 902 also has a work area used when the CPU 901 performs various processes. The RAM 902 can thus provide various areas as appropriate.

The ROM 903 stores setting data of the computer apparatus, computer programs and data related to activation of the computer apparatus, computer programs and data related to basic operations of the computer apparatus, or the like.

An operation unit 904 is a user interface such as a keyboard, a mouse, and a touch panel screen, and can input various instructions and information to the computer apparatus by being operated by the user.

A display unit 905, having a liquid crystal screen or a touch panel screen, can display results of processing by the CPU 901 via images, characters, or the like. Note that the display unit 905 may be a projection device such as a projector that projects images or characters.

The storage device 906 is a large-capacity information storage device such as a hard disk drive device. The storage device 906 saves an operating system (OS), and computer programs and data for causing the CPU 901 to perform or control various types of processing described as processing performed by the image processing apparatus 103, and the like. The computer programs saved in the storage device 906 can also include computer programs for causing the CPU 901 to perform or control the functions of the functional units illustrated in FIGS. 1 and 7. The data saved in the storage device 906 can also include known parameters such as the above-described threshold and adjustment parameter. Images captured by the visible light camera 101 and the invisible light camera 102 may be saved in the storage device 906, and the CPU 901 may read the images and perform processing as necessary.

The I/F 907 is a communication interface for performing data communication with external apparatuses via a network such as a LAN or the Internet. For example, the computer apparatus can acquire, via the I/F 907, images captured by the visible light camera 101 and the invisible light camera 102.

The CPU 901, the RAM 902, the ROM 903, the operation unit 904, the display unit 905, the storage device 906, and the I/F 907 are all connected to a system bus 908. Note that the hardware configuration of the computer apparatus applicable to the image processing apparatus 103 is not limited to the configuration illustrated in FIG. 9, and can be appropriately modified/changed.

Note that the configuration of the system described in the embodiments described above can be appropriately modified or changed depending on specifications, various conditions (usage conditions, usage environment, and the like), and the like of the apparatus applied to the system, and the configuration described in the embodiments described above is merely an example.

Numerical values, processing timings, processing orders, processing subjects, data (information) configurations/acquisition methods/transmission destinations/transmission sources/storage locations, and the like used in the embodiments described above are given as examples for specific descriptions, and are not intended to be limited to such examples.

Alternatively, some or all of the embodiments described above may be used in combination as appropriate.

**EP 4 597 417 B1**

Alternatively, some or all of the embodiments described above may be selectively used. All the configurations of the embodiments described above are not necessarily essential.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments, but is defined by the claims.

**Claims**

1. An image processing apparatus (103), comprising:

   first detection means (203) for detecting a subject from a first image obtained by image capturing using visible light;
   second detection means (204) for detecting a subject from a second image obtained by image capturing using invisible light; and
   correction means (205, 207, 208) for performing gradation correction on the first image based on a detection result of the subject by the first detection means (203) and a detection result of the subject by the second detection means (204), **characterized in that**
   the first detection means (203) is configured to calculate first likelihood representing a degree of likelihood of being a main subject of the subject detected from the first image,
   the second detection means (204) is configured to calculate second likelihood representing a degree of likelihood of being a main subject of the subject detected from the second image, and
   the correction means (205, 207, 208) is configured to calculate a degree of occurrence of fog and haze in the first image, calculate a weight value for each of the first likelihood and the second likelihood based on the degree of occurrence of fog and haze, specify a region of the main subject in the first image as a target region that is a target of gradation correction based on a result of weighted addition of the first likelihood and the second likelihood based on the calculated weight value, and perform gradation correction on the target region.

2. The image processing apparatus (103) according to claim 1, wherein the correction means (205, 207, 208) is configured to generate a histogram of a luminance value in the first image, and calculate the degree of occurrence of fog and haze based on a statistic value representing a distribution density of the generated histogram.

3. The image processing apparatus (103) according to claim 1, wherein the correction means (205, 207, 208) is configured to calculate the degree of occurrence of fog and haze according to a contrast value of the first image.

4. The image processing apparatus (103) according to claim 1, wherein the correction means (205, 207, 208) is configured to calculate the degree of occurrence of fog and haze according to intensity of an edge component in the first image.

5. The image processing apparatus (103) according to claim 1, wherein the correction means (205, 207, 208) is configured to calculate the degree of occurrence of fog and haze according to a dark channel value of the first image.

6. The image processing apparatus (103) according to claim 1, wherein the correction means (205, 207, 208) is configured to calculate the weight value for each of the first likelihood and the second likelihood such that the weight value for the second likelihood increases as the degree of occurrence of fog and haze increases, and the weight value for the first likelihood increases as the degree of occurrence of fog and haze decreases.

7. The image processing apparatus (103) according to claim 1, wherein the correction means (205, 207, 208) is configured to calculate a gradation correction curve based on a distribution of a luminance value of the target region in the first image, and convert the luminance value of the target region in the first image using the gradation correction curve.

8. An image processing apparatus (103), comprising:

first detection means (203) for detecting a subject from a first image obtained by image capturing using visible light;
second detection means (204) for detecting a subject from a second image obtained by image capturing using invisible light; and
correction means (207, 208, 209) for performing gradation correction on the first image based on a detection result of the subject by the first detection means (203) and a detection result of the subject by the second detection means (204),
**characterized in that**
the first detection means (203) is configured to calculate first likelihood representing a degree of likelihood of being a main subject of the subject detected from the first image,
the second detection means (204) is configured to calculate second likelihood representing a degree of likelihood of being a main subject of the subject detected from the second image, and
the correction means (207, 208, 209) is configured to acquire a distance to the subject detected from the first image, calculate a weight value for each of the first likelihood and the second likelihood based on the distance, specify a region of the main subject in the first image as a target region that is a target of gradation correction based on a result of weighted addition of the first likelihood and the second likelihood based on the calculated weight value, and perform gradation correction on the target region.

9. The image processing apparatus (103) according to claim 1 or 8, wherein

the first image is captured by an image capturing apparatus (101) that can capture visible light, and
the second image is captured by an image capturing apparatus (102) that can capture invisible light.

10. The image processing apparatus (103) according to claim 1 or 8, wherein
the first image and the second image are captured by a single image capturing apparatus including a visible light sensor and an invisible light sensor.

11. The image processing apparatus (103) according to claim 1 or 8, wherein
the first image and the second image are captured by an image capturing apparatus including a pixel for visible light and a pixel for invisible light in one sensor.

12. The image processing apparatus (103) according to claim 1 or 8, further comprising:

an image capturing apparatus (101) that can capture visible light; and
an image capturing apparatus (102) that can capture invisible light.

13. An image processing method to be performed by an image processing apparatus (103), the image processing method comprising:

performing first detection processing of detecting a subject from a first image obtained by image capturing using visible light;
performing second detection processing of detecting a subject from a second image obtained by image capturing using invisible light; and
performing gradation correction on the first image based on a detection result of the subject by the first detection processing and a detection result of the subject by the second detection processing,
**characterized by**

calculating first likelihood representing a degree of likelihood of being a main subject of the subject detected from the first image,

calculating second likelihood representing a degree of likelihood of being a main subject of the subject detected from the second image, and

calculating a degree of occurrence of fog and haze in the first image, calculating a weight value for each of the first likelihood and the second likelihood based on the degree of occurrence of fog and haze, specifying a region of the main subject in the first image as a target region that is a target of gradation correction based on a result of weighted addition of the first likelihood and the second likelihood based on the calculated weight value, and performing gradation correction on the target region.

14. An image processing method to be performed by an image processing apparatus (103), the image processing method comprising:

performing first detection processing of detecting a subject from a first image obtained by image capturing using visible light;

performing second detection processing of detecting a subject from a second image obtained by image capturing using invisible light; and

performing gradation correction on the first image based on a detection result of the subject by the first detection processing and a detection result of the subject by the second detection processing,

**characterized by**

calculating first likelihood representing a degree of likelihood of being a main subject of the subject detected from the first image,

calculating second likelihood representing a degree of likelihood of being a main subject of the subject detected from the second image, and

acquiring a distance to the subject detected from the first image, calculating a weight value for each of the first likelihood and the second likelihood based on the distance, specifying a region of the main subject in the first image as a target region that is a target of gradation correction based on a result of weighted addition of the first likelihood and the second likelihood based on the calculated weight value, and performing gradation correction on the target region.

15. A computer-readable storage medium storing instructions which, when executed by a computer, cause the computer to carry out the method of claim 13 or 14.

**Patentansprüche**

1. Bildverarbeitungsvorrichtung (103), umfassend:

eine erste Detektionseinrichtung (203) zum Detektieren eines Motivs aus einem ersten Bild, das durch eine Bildaufnahme unter Verwendung von sichtbarem Licht erhalten wurde;

eine zweite Detektionseinrichtung (204) zum Detektieren eines Motivs aus einem zweiten Bild, das durch eine Bildaufnahme unter Verwendung von nicht sichtbarem Licht erhalten wurde; und

eine Korrektureinrichtung (205, 207, 208) zum Durchführen einer Gradationskorrektur an dem ersten Bild basierend auf einem Detektionsergebnis des Motivs durch die erste Detektionseinrichtung (203) und einem Detektionsergebnis des Motivs durch die zweite Detektionseinrichtung (204),

**dadurch gekennzeichnet, dass**

die erste Detektionseinrichtung (203) dazu eingerichtet ist, eine erste Wahrscheinlichkeit zu berechnen, die einen Grad der Wahrscheinlichkeit, dass das aus dem ersten Bild detektierte Motiv ein Hauptmotiv ist, darstellt;

die zweite Detektionseinrichtung (204) dazu eingerichtet ist, eine zweite Wahrscheinlichkeit zu berechnen, die einen Grad der Wahrscheinlichkeit, dass das aus dem zweiten Bild detektierte Motiv ein Hauptmotiv ist, darstellt; und

die Korrektureinrichtung (205, 207, 208) dazu eingerichtet ist, einen Grad des Auftretens von Nebel und Dunst in dem ersten Bild zu berechnen, einen Gewichtungswert für jede der ersten Wahrscheinlichkeit und der zweiten Wahrscheinlichkeit basierend auf dem Grad des Auftretens von Nebel und Dunst zu berechnen, einen Bereich des Hauptmotivs in dem ersten Bild als einen Zielbereich, der ein Ziel einer Gradationskorrektur ist, basierend auf einem Ergebnis einer auf dem berechneten Gewichtungswert basierenden gewichteten Addition der ersten Wahrscheinlichkeit und der zweiten Wahrscheinlichkeit festzulegen, und eine Gradationskorrektur an dem Zielbereich durchzuführen.

2. Bildverarbeitungsvorrichtung (103) nach Anspruch 1, wobei die Korrektureinrichtung (205, 207, 208) dazu eingerichtet ist, ein Histogramm eines Luminanzwerts in dem ersten Bild zu erzeugen und den Grad des Auftretens von Nebel und Dunst basierend auf einem statistischen Wert, der eine Verteilungsdichte des erzeugten Histogramms darstellt, zu berechnen.

3. Bildverarbeitungsvorrichtung (103) nach Anspruch 1, wobei die Korrektureinrichtung (205, 207, 208) dazu eingerichtet ist, den Grad des Auftretens von Nebel und Dunst entsprechend einem Kontrastwert des ersten Bildes zu berechnen.

4. Bildverarbeitungsvorrichtung (103) nach Anspruch 1, wobei die Korrektureinrichtung (205, 207, 208) dazu eingerichtet ist, den Grad des Auftretens von Nebel und Dunst entsprechend einer Intensität einer Kantenkomponente in dem ersten Bild zu berechnen.

5. Bildverarbeitungsvorrichtung (103) nach Anspruch 1, wobei die Korrektureinrichtung (205, 207, 208) dazu eingerichtet ist, den Grad des Auftretens von Nebel und Dunst entsprechend einem Dunkelkanalwert des ersten Bildes zu berechnen.

6. Bildverarbeitungsvorrichtung (103) nach Anspruch 1, wobei die Korrektureinrichtung (205, 207, 208) dazu eingerichtet ist, den Gewichtungswert für jede der ersten Wahrscheinlichkeit und der zweiten Wahrscheinlichkeit derart zu berechnen, dass der Gewichtungswert für die zweite Wahrscheinlichkeit zunimmt, wenn der Grad des Auftretens von Nebel und Dunst zunimmt, und der Gewichtungswert für die erste Wahrscheinlichkeit zunimmt, wenn der Grad des Auftretens von Nebel und Dunst abnimmt.

7. Bildverarbeitungsvorrichtung (103) nach Anspruch 1, wobei die Korrektureinrichtung (205, 207, 208) dazu eingerichtet ist, eine Gradationskorrekturkurve basierend auf einer Verteilung eines Luminanzwerts des Zielbereichs in dem ersten Bild zu berechnen und den Luminanzwert des Zielbereichs in dem ersten Bild unter Verwendung der Gradationskorrekturkurve umzuwandeln.

8. Bildverarbeitungsvorrichtung (103), umfassend:

   eine erste Detektionseinrichtung (203) zum Detektieren eines Motivs aus einem ersten Bild, das durch eine Bildaufnahme unter Verwendung von sichtbarem Licht erhalten wurde;
   eine zweite Detektionseinrichtung (204) zum Detektieren eines Motivs aus einem zweiten Bild, das durch eine Bildaufnahme unter Verwendung von nicht sichtbarem Licht erhalten wurde; und
   eine Korrektureinrichtung (207, 208, 209) zum Durchführen einer Gradationskorrektur an dem ersten Bild basierend auf einem Detektionsergebnis des Motivs durch die erste Detektionseinrichtung (203) und einem Detektionsergebnis des Motivs durch die zweite Detektionseinrichtung (204),
   **dadurch gekennzeichnet, dass**
   die erste Detektionseinrichtung (203) dazu eingerichtet ist, eine erste Wahrscheinlichkeit zu berechnen, die einen Grad der Wahrscheinlichkeit, dass das aus dem ersten Bild detektierte Motiv ein Hauptmotiv ist, darstellt;
   die zweite Detektionseinrichtung (204) dazu eingerichtet ist, eine zweite Wahrscheinlichkeit zu berechnen, die einen Grad der Wahrscheinlichkeit, dass das aus dem zweiten Bild detektierte Motiv ein Hauptmotiv ist, darstellt; und
   die Korrektureinrichtung (207, 208, 209) dazu eingerichtet ist, einen Abstand zu dem aus dem ersten Bild detektierten Motiv zu erfassen, einen Gewichtungswert für jede der ersten Wahrscheinlichkeit und der zweiten Wahrscheinlichkeit basierend auf dem Abstand zu berechnen, einen Bereich des Hauptmotivs in dem ersten Bild als einen Zielbereich, der ein Ziel einer Gradationskorrektur ist, basierend auf einem Ergebnis einer auf dem berechneten Gewichtungswert basierenden gewichteten Addition der ersten Wahrscheinlichkeit und der zweiten Wahrscheinlichkeit festzulegen, und eine Gradationskorrektur an dem Zielbereich durchzuführen.

9. Bildverarbeitungsvorrichtung (103) nach Anspruch 1 oder 8, wobei

   das erste Bild durch eine Bildaufnahmevorrichtung (101), die sichtbares Licht aufnehmen kann, aufgenommen wird; und
   das zweite Bild durch eine Bildaufnahmevorrichtung (102), die nicht sichtbares Licht aufnehmen kann, aufgenommen wird.

10. Bildverarbeitungsvorrichtung (103) nach Anspruch 1 oder 8, wobei

das erste Bild und das zweite Bild durch eine einzelne Bildaufnahmevorrichtung aufgenommen werden, die einen Sensor für sichtbares Licht und einen Sensor für nicht sichtbares Licht enthält.

11. Bildverarbeitungsvorrichtung (103) nach Anspruch 1 oder 8, wobei

das erste Bild und das zweite Bild durch eine Bildaufnahmevorrichtung aufgenommen werden, die ein Pixel für sichtbares Licht und ein Pixel für nicht sichtbares Licht in einem Sensor enthält.

12. Bildverarbeitungsvorrichtung (103) nach Anspruch 1 oder 8, ferner umfassend:

eine Bildaufnahmevorrichtung (101), die sichtbares Licht aufnehmen kann; und
eine Bildaufnahmevorrichtung (102), die nicht sichtbares Licht aufnehmen kann.

13. Bildverarbeitungsverfahren, das durch eine Bildverarbeitungsvorrichtung (103) durchgeführt wird, wobei das Bildverarbeitungsverfahren umfasst:

Durchführen einer ersten Detektionsverarbeitung zum Detektieren eines Motivs aus einem ersten Bild, das durch eine Bildaufnahme unter Verwendung von sichtbarem Licht erhalten wurde;
Durchführen einer zweiten Detektionsverarbeitung zum Detektieren eines Motivs aus einem zweiten Bild, das durch eine Bildaufnahme unter Verwendung von nicht sichtbarem Licht erhalten wurde; und
Durchführen einer Gradationskorrektur an dem ersten Bild basierend auf einem Detektionsergebnis des Motivs durch die erste Detektionsverarbeitung und einem Detektionsergebnis des Motivs durch die zweite Detektionsverarbeitung,
**gekennzeichnet durch**
Berechnen einer ersten Wahrscheinlichkeit, die einen Grad der Wahrscheinlichkeit, dass das aus dem ersten Bild detektierte Motiv ein Hauptmotiv ist, darstellt;
Berechnen einer zweiten Wahrscheinlichkeit, die einen Grad der Wahrscheinlichkeit, dass das aus dem zweiten Bild detektierte Motiv ein Hauptmotiv ist, darstellt; und
Berechnen eines Grades des Auftretens von Nebel und Dunst in dem ersten Bild, Berechnen eines Gewichtungswerts für jede der ersten Wahrscheinlichkeit und der zweiten Wahrscheinlichkeit basierend auf dem Grad des Auftretens von Nebel und Dunst, Festlegen eines Bereichs des Hauptmotivs in dem ersten Bild als einen Zielbereich, der ein Ziel einer Gradationskorrektur ist, basierend auf einem Ergebnis einer auf dem berechneten Gewichtungswert basierenden gewichteten Addition der ersten Wahrscheinlichkeit und der zweiten Wahrscheinlichkeit, und Durchführen einer Gradationskorrektur an dem Zielbereich.

14. Bildverarbeitungsverfahren, das durch eine Bildverarbeitungsvorrichtung (103) durchgeführt wird, wobei das Bildverarbeitungsverfahren umfasst:

Durchführen einer ersten Detektionsverarbeitung zum Detektieren eines Motivs aus einem ersten Bild, das durch eine Bildaufnahme unter Verwendung von sichtbarem Licht erhalten wurde;
Durchführen einer zweiten Detektionsverarbeitung zum Detektieren eines Motivs aus einem zweiten Bild, das durch eine Bildaufnahme unter Verwendung von nicht sichtbarem Licht erhalten wurde; und
Durchführen einer Gradationskorrektur an dem ersten Bild basierend auf einem Detektionsergebnis des Motivs durch die erste Detektionsverarbeitung und einem Detektionsergebnis des Motivs durch die zweite Detektionsverarbeitung,
**gekennzeichnet durch**
Berechnen einer ersten Wahrscheinlichkeit, die einen Grad der Wahrscheinlichkeit, dass das aus dem ersten Bild detektierte Motiv ein Hauptmotiv ist, darstellt;
Berechnen einer zweiten Wahrscheinlichkeit, die einen Grad der Wahrscheinlichkeit, dass das aus dem zweiten Bild detektierte Motiv ein Hauptmotiv ist, darstellt; und
Erfassen eines Abstands zu dem aus dem ersten Bild detektierten Motiv, Berechnen eines Gewichtungswerts für jede der ersten Wahrscheinlichkeit und der zweiten Wahrscheinlichkeit basierend auf dem Abstand, Festlegen eines Bereichs des Hauptmotivs in dem ersten Bild als einen Zielbereich, der ein Ziel einer Gradationskorrektur ist, basierend auf einem Ergebnis einer auf dem berechneten Gewichtungswert basierenden gewichteten Addition der ersten Wahrscheinlichkeit und der zweiten Wahrscheinlichkeit, und Durchführen einer Gradationskorrektur an dem Zielbereich.

15. Computerlesbares Speichermedium, das Anweisungen speichert, die, wenn sie durch einen Computer ausgeführt werden, den Computer veranlassen, das Verfahren nach Anspruch 13 oder 14 auszuführen.

**Revendications**

1. Appareil de traitement d'image (103), comprenant :

   un premier moyen de détection (203) pour détecter un sujet à partir d'une première image obtenue par capture d'image à l'aide d'une lumière visible ;
   un second moyen de détection (204) pour détecter un sujet à partir d'une seconde image obtenue par capture d'image à l'aide d'une lumière invisible ; et
   un moyen de correction (205, 207, 208) pour réaliser une correction de gradation sur la première image sur la base d'un résultat de détection du sujet par le premier moyen de détection (203) et d'un résultat de détection du sujet par le second moyen de détection (204), **caractérisé en ce que**
   le premier moyen de détection (203) est configuré pour calculer une première probabilité représentant un degré de probabilité d'être un sujet principal du sujet détecté à partir de la première image,
   le second moyen de détection (204) est configuré pour calculer une seconde probabilité représentant un degré de probabilité d'être un sujet principal du sujet détecté à partir de la seconde image, et
   le moyen de correction (205, 207, 208) est configuré pour calculer un degré d'occurrence de brouillard et de brume dans la première image, calculer une valeur de poids pour chacune de la première probabilité et de la seconde probabilité sur la base du degré d'occurrence de brouillard et de brume, spécifier une région du sujet principal dans la première image comme une région cible qui est une cible de correction de gradation sur la base d'un résultat d'addition pondérée de la première probabilité et de la seconde probabilité sur la base de la valeur de poids calculée, et réaliser une correction de gradation sur la région cible.

2. Appareil de traitement d'image (103) selon la revendication 1, dans lequel le moyen de correction (205, 207, 208) est configuré pour générer un histogramme d'une valeur de luminance dans la première image, et calculer le degré d'occurrence de brouillard et de brume sur la base d'une valeur statistique représentant une densité de distribution de l'histogramme généré.

3. Appareil de traitement d'image (103) selon la revendication 1, dans lequel le moyen de correction (205, 207, 208) est configuré pour calculer le degré d'occurrence de brouillard et de brume selon une valeur de contraste de la première image.

4. Appareil de traitement d'image (103) selon la revendication 1, dans lequel le moyen de correction (205, 207, 208) est configuré pour calculer le degré d'occurrence de brouillard et de brume en fonction d'une intensité d'un composant de bord dans la première image.

5. Appareil de traitement d'image (103) selon la revendication 1, dans lequel le moyen de correction (205, 207, 208) est configuré pour calculer le degré d'occurrence de brouillard et de brume selon une valeur de canal sombre de la première image.

6. Appareil de traitement d'image (103) selon la revendication 1, dans lequel le moyen de correction (205, 207, 208) est configuré pour calculer la valeur de poids pour chacune de la première probabilité et de la seconde probabilité de sorte que la valeur de poids pour la seconde probabilité augmente à mesure que le degré d'occurrence de brouillard et de brume augmente, et la valeur de poids pour la première probabilité augmente à mesure que le degré d'occurrence de brouillard et de brume diminue.

7. Appareil de traitement d'image (103) selon la revendication 1, dans lequel le moyen de correction (205, 207, 208) est configuré pour calculer une courbe de correction de gradation sur la base d'une distribution d'une valeur de luminance de la région cible dans la première image, et convertir la valeur de luminance de la région cible dans la première image à l'aide de la courbe de correction de gradation.

8. Appareil de traitement d'image (103), comprenant :

   un premier moyen de détection (203) pour détecter un sujet à partir d'une première image obtenue par capture d'image à l'aide d'une lumière visible ;
   un second moyen de détection (204) pour détecter un sujet à partir d'une seconde image obtenue par capture d'image à l'aide d'une lumière invisible ; et
   un moyen de correction (207, 208, 209) pour réaliser une correction de gradation sur la première image sur la base d'un résultat de détection du sujet par le premier moyen de détection (203) et d'un résultat de détection du sujet par le second moyen de détection (204),

**caractérisé en ce que**

le premier moyen de détection (203) est configuré pour calculer une première probabilité représentant un degré de probabilité d'être un sujet principal du sujet détecté à partir de la première image,

le second moyen de détection (204) est configuré pour calculer une seconde probabilité représentant un degré de probabilité d'être un sujet principal du sujet détecté à partir de la seconde image, et

le moyen de correction (207, 208, 209) est configuré pour acquérir une distance au sujet détecté à partir de la première image, calculer une valeur de poids pour chacune de la première probabilité et de la seconde probabilité sur la base de la distance, spécifier une région du sujet principal dans la première image comme une région cible qui est une cible de correction de gradation sur la base d'un résultat d'addition pondérée de la première probabilité et de la seconde probabilité sur la base de la valeur de poids calculée, et réaliser une correction de gradation sur la région cible.

9. Appareil de traitement d'image (103) selon la revendication 1 ou 8, dans lequel
la première image est capturée par un appareil de capture d'image (101) qui peut capturer de la lumière visible, et la seconde image est capturée par un appareil de capture d'image (102) qui peut capturer de la lumière invisible.

10. Appareil de traitement d'image (103) selon la revendication 1 ou 8, dans lequel
la première image et la seconde image sont capturées par un seul appareil de capture d'image comportant un capteur de lumière visible et un capteur de lumière invisible.

11. Appareil de traitement d'image (103) selon la revendication 1 ou 8, dans lequel
la première image et la seconde image sont capturées par un appareil de capture d'image comportant un pixel pour la lumière visible et un pixel pour la lumière invisible dans un capteur.

12. Appareil de traitement d'image (103) selon la revendication 1 ou 8, comprenant en outre :

un appareil de capture d'image (101) qui peut capturer de la lumière visible ; et
un appareil de capture d'image (102) qui peut capturer de la lumière invisible.

13. Procédé de traitement d'image à réaliser par un appareil de traitement d'image (103), le procédé de traitement d'image comprenant :

la réalisation d'un premier traitement de détection comprenant la détection d'un sujet à partir d'une première image obtenue par capture d'image à l'aide d'une lumière visible ;
la réalisation d'un second traitement de détection comprenant la détection d'un sujet à partir d'une seconde image obtenue par capture d'image à l'aide d'une lumière invisible ; et
la réalisation d'une correction de gradation sur la première image sur la base d'un résultat de détection du sujet par le premier traitement de détection et d'un résultat de détection du sujet par le second traitement de détection,
**caractérisé par**
le calcul d'une première probabilité représentant un degré de probabilité d'être un sujet principal du sujet détecté à partir de la première image,
le calcul d'une seconde probabilité représentant un degré de probabilité d'être un sujet principal du sujet détecté à partir de la seconde image, et
le calcul d'un degré d'occurrence de brouillard et de brume dans la première image, le calcul d'une valeur de poids pour chacune de la première probabilité et de la seconde probabilité sur la base du degré d'occurrence de brouillard et de brume, la spécification d'une région du sujet principal dans la première image comme une région cible qui est une cible de correction de gradation sur la base d'un résultat d'addition pondérée de la première probabilité et de la seconde probabilité sur la base de la valeur de poids calculée, et la réalisation d'une correction de gradation sur la région cible.

14. Procédé de traitement d'image à réaliser par un appareil de traitement d'image (103), le procédé de traitement d'image comprenant :

la réalisation d'un premier traitement de détection comprenant la détection d'un sujet à partir d'une première image obtenue par capture d'image à l'aide d'une lumière visible ;
la réalisation d'un second traitement de détection comprenant la détection d'un sujet à partir d'une seconde image obtenue par capture d'image à l'aide d'une lumière invisible ; et

la réalisation d'une correction de gradation sur la première image sur la base d'un résultat de détection du sujet par le premier traitement de détection et d'un résultat de détection du sujet par le second traitement de détection, **caractérisé par**

le calcul d'une première probabilité représentant un degré de probabilité d'être un sujet principal du sujet détecté à partir de la première image,

le calcul d'une seconde probabilité représentant un degré de probabilité d'être un sujet principal du sujet détecté à partir de la seconde image, et

l'acquisition d'une distance au sujet détecté à partir de la première image, le calcul d'une valeur de poids pour chacune de la première probabilité et de la seconde probabilité sur la base de la distance, la spécification d'une région du sujet principal dans la première image comme une région cible qui est une cible de correction de gradation sur la base d'un résultat d'addition pondérée de la première probabilité et de la seconde probabilité sur la base de la valeur de poids calculée, et la réalisation d'une correction de gradation sur la région cible.

15. Support de stockage lisible par ordinateur stockant des instructions qui, lorsqu'elles sont exécutées par un ordinateur, amènent l'ordinateur à réaliser le procédé selon la revendication 13 ou 14.

FIG. 1

# FIG. 2

```
                    ┌─────────┐
                    │  START  │
                    └────┬────┘
                         │ ◄──────────────────────────┐
         ┌───────────────▼───────────────┐            │
         │  ACQUIRE VISIBLE LIGHT IMAGE   │   S301     │
         │  FROM VISIBLE LIGHT CAMERA     │            │
         └───────────────┬───────────────┘            │
         ┌───────────────▼───────────────┐            │
         │  ACQUIRE INVISIBLE LIGHT IMAGE │   S302     │
         │  FROM INVISIBLE LIGHT CAMERA   │            │
         └───────────────┬───────────────┘            │
         ┌───────────────▼───────────────┐            │
         │     DETECT SUBJECTS FROM       │   S303     │
         │      VISIBLE LIGHT IMAGE       │            │
         └───────────────┬───────────────┘            │
         ┌───────────────▼───────────────┐            │
         │     DETECT SUBJECTS FROM       │   S304     │
         │     INVISIBLE LIGHT IMAGE      │            │
         └───────────────┬───────────────┘            │
                         │              S305           │
                    ◄────▼────►                        │
              WAS SUBJECT              NO               │
              DETECTED?  ──────────────────────────────┘
                    ◄─────────►
                         │ YES
         ┌───────────────▼───────────────┐
         │  CALCULATE FOG AND HAZE LEVEL  │   S306
         │     FROM VISIBLE LIGHT IMAGE   │
         └───────────────┬───────────────┘
         ┌───────────────▼───────────────┐
         │ WEIGHT EVALUATION VALUES AND ADD THEM │  S307
         └───────────────┬───────────────┘
         ┌───────────────▼───────────────┐
         │     DETERMINE TARGET REGION    │   S308
         └───────────────┬───────────────┘
         ┌───────────────▼───────────────┐
         │     CORRECT GRADATION OF       │   S309
         │      VISIBLE LIGHT IMAGE       │
         └───────────────┬───────────────┘
                    ┌─────▼─────┐
                    │    END    │
                    └───────────┘
```

# F I G. 3A

401

EVALUATION
VALUE 30

EVALUATION
VALUE 80

402

# F I G. 3B

401

EVALUATION
VALUE 40

EVALUATION
VALUE 75

402

# F I G. 4A

401

402

EVALUATION
VALUE 60

EVALUATION
VALUE 60

# F I G. 4B

401

402

EVALUATION
VALUE 40

EVALUATION
VALUE 75

# F I G. 5

WHEN FOG AND HAZE ARE OCCURRING, DISTRIBUTION OF HISTOGRAM IS CONCENTRATED IN PARTIAL REGION

NUMBER OF FREQUENCIES

$f_i$

$X_i$

INPUT LUMINANCE LEVELS

# F I G. 6A

# F I G. 6B

IMAGE PROCESSING APPARATUS 103

102

101

202 ACQUISITION UNIT

201 ACQUISITION UNIT

204 DETECTION UNIT

203 DETECTION UNIT

206 INTEGRATION UNIT

207 DETERMINATION UNIT

209 MEASUREMENT UNIT

208 CORRECTION UNIT

EP 4 597 417 B1

# F I G. 8

```
                    ┌─────────┐
                    │  START  │
                    └─────────┘
                         │
                         ▼
        ┌───────────────────────────────────┐
        │  ACQUIRE VISIBLE LIGHT IMAGE       │── S301
        │  FROM VISIBLE LIGHT CAMERA         │
        └───────────────────────────────────┘
                         │
                         ▼
        ┌───────────────────────────────────┐
        │  ACQUIRE INVISIBLE LIGHT IMAGE     │── S302
        │  FROM INVISIBLE LIGHT CAMERA       │
        └───────────────────────────────────┘
                         │
                         ▼
        ┌───────────────────────────────────┐
        │  DETECT SUBJECTS FROM              │── S303
        │  VISIBLE LIGHT IMAGE               │
        └───────────────────────────────────┘
                         │
                         ▼
        ┌───────────────────────────────────┐
        │  DETECT SUBJECTS FROM              │── S304
        │  INVISIBLE LIGHT IMAGE             │
        └───────────────────────────────────┘
                         │
                         ▼         S305
                    ◇─────────────◇
                    │ WAS SUBJECT │   NO
                    │  DETECTED?  │─────────►
                    ◇─────────────◇
                         │ YES
                         ▼
        ┌───────────────────────────────────┐
        │  MEASURE DISTANCE                  │── S501
        │  INFORMATION OF SUBJECT            │
        └───────────────────────────────────┘
                         │
                         ▼
        ┌───────────────────────────────────┐
        │  WEIGHT EVALUATION VALUES AND ADD THEM │── S307
        └───────────────────────────────────┘
                         │
                         ▼
        ┌───────────────────────────────────┐
        │  DETERMINE TARGET REGION           │── S308
        └───────────────────────────────────┘
                         │
                         ▼
        ┌───────────────────────────────────┐
        │  CORRECT GRADATION OF              │── S309
        │  VISIBLE LIGHT IMAGE               │
        └───────────────────────────────────┘
                         │
                         ▼
                    ┌─────────┐
                    │   END   │
                    └─────────┘
```

26

# F I G. 9

901~ CPU

902~ RAM

903~ ROM

904~ OPERATION UNIT

905~ DISPLAY UNIT

906~ STORAGE DEVICE

I/F

907

908~

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006098614 A

- JP 2023090628 A